# EUROPÄISCHE PATENTSCHRIFT

(11) **EP 1 918 095 B1**
(45) Veröffentlichungstag und Bekanntmachung des Hinweises auf die Patenterteilung: **15.12.2010**
(21) Anmeldenummer: 07021271.7
(22) Anmeldetag: 31.10.2007
(51) Int. Cl.: B32B 21/14, B32B 21/02, B32B 27/00, B44C 5/04, B44F 9/02, E04F 15/02

(54) **Holzwerkstoffplatte mit Echtholzfurnier und Verfahren zu Ihrer Veredelung**
Composite wood board with real wood veneer and processing method
Plaque en matériau dérivé du bois dotée d'un contreplacage en bois véritable et son procédé de fabrication

(30) Priorität: 03.11.2006 DE 102006052293
(43) Veröffentlichungstag der Anmeldung: 07.05.2008
(73) Patentinhaber: Flooring Technologies Ltd., Pieta PTA 9044 (MT)
(72) Erfinder:
(74) Vertreter: Rehmann, Thorsten

(56) Entgegenhaltungen:
- EP-A- 1 479 524
- EP-A- 1 512 468
- DE-A1- 4 434 876
- DE-A1- 10 245 914
- DE-U- 1 968 511
- DATABASE WPI Week 197346 Derwent Publications Ltd., London, GB; AN 1973-70607U XP002463937 & JP 48 038130 B (HIRANO FURNITURE MANUFACT) 15. November 1973 (1973-11-15)
- DATABASE WPI Week 197834 Derwent Publications Ltd., London, GB; AN 1978-61134A XP002463938 & JP 53 081607 A (EIDAI CO LTD) 19. Juli 1978 (1978-07-19)

## Beschreibung

Die Erfindung betrifft eine Holzwerkstoffplatte, insbesondere ein Fußbodenpaneel, mit einem Kern aus OSB, einer auf zumindest einer Oberseite des Kerns aufgebrachten Echtholz-Furnierschicht und einer die Furnierschicht abdeckenden Versiegelungsschicht und ein Verfahren zur Veredelung einer solchen Holzwerkstoffplatte.

Aus der DE 103 00 247 A1 ist eine Holzwerkstoffplatte mit einem Kern aus OSB und einer Deckschicht aus Holz bekannt. Wenn als Decklage eine dünne Echtholz-Furnierschicht Verwendung findet, ist es notwendig, zusätzlich eine harzgetränkte Zwischenlage aus Papier vorzusehen, um ein Durchscheinen des OSB-Kerns durch das Furnier zu verhindern. Der Harzanteil in der Papierlage gleicht außerdem Oberflächenunebenheiten aus. Eine solche Zwischenlage ist recht kostenintensiv.

Aus der DE 295 21 729 U1 ist ein Bodenelement bekannt, bei dem auf eine HDF-Trägerplatte ein EchtholzFurnier aufgebracht ist, das verschleißfest mit einer Melaminharzschicht oder einer melaminbeharzten Papierschicht beschichtet ist. Um ein Verwerfen der Bodenplatte zu verhindern, ist diese mit einem sogenannten Unterzug versehen, damit auf beiden Seiten der Trägerplatte Materialien mit dem gleichen Dehnungsverhalten vorliegen.

Bei der Verwendung von dickeren Furnieren, insbesondere von hochwertigen und optisch ansprechenden Hölzern, werden aufgrund des hochwertigen Ausgangsmaterials die Herstellkosten derartiger Holzwerkstoffplatten recht hoch. Ein geldwerter Vorteil, der durch die Einsparung einer Zwischenlage möglich ist, wenn dickere Furniere verwendet werden, wird dann sehr schnell aufgezehrt oder sogar übertroffen.

Aus der Patentschrift DD 205 642 ist es bekannt, nicht oder weniger dekorative und somit preisgünstigere Furniere über deren gesamten Querschnitt unter Hervorhebung ihrer Textur differenziert durchzufärben, so dass diese optisch zu edelholzfurnierartigen Qualitäten veredelt werden können. Zur Veredelung sind neben nicht dekorativen und preiswert erhältlichen auch wertgeminderte Furniere einheimischer oder nicht einheimischer Holzarten mit schlechter oder fehlerhafter Textur geeignet. Durch das Einfärben entstehen völlig neue farbige Texturen. Eine differenzierte Durchfärbung verleiht dem Furnier, auch im Bereich des Früh- und Spätholzes bei einheimischen Holzarten, sehr interessante Textureffekte, die eine Qualitätssteigerung suggerieren. Das Durchfärben eines Furniers ist sehr zeit- und kostenaufwändig. Die notwendigen Farbbäder müssen laufend gereinigt werden, um eine hohe Qualität zu sichern, der entsprechende Wartungsaufwand ist hoch.

Aus der US 3,486,919 A ist es bekannt, eine aus preiswertem und optisch einfachem Holz hergestellte Sperrholzplatte optisch dadurch zu veredeln, dass zunächst die Oberfläche geglättet wird und dann eine Grundbeschichtung vorgenommen wird, die die natürliche Farbe des Holzes überdeckt. Dann wird die Oberfläche strukturiert, um in Bereichen Poren zu erzeugen, die in dem Holz, dessen Dekor nachgebildet werden soll, natürlich auftreten. Anschließend wird durch mehrere Farbaufträge das gewünschte Dekor erzeugt.

Aus der DE 19 68 511 U1 ist es bekannt, auf eine glatte Tischlerplatte, Faserplatte oder Spanplatte ein Echtholzfurnier aufzukleben, was zur Veredelung dient und aufgrund der glatten Oberfläche der gewählten Trägerplatten sehr einfach erfolgen kann. Auch aus der JP 48 038 130 B oder der JP 53 081 607 A ist es bekannt, als zu veredelnde Trägerplatte eine Sperrholzplatte zu verwenden, um diese durch Aufkleben eines Echtholzfurniers zu veredeln.

Aus der DE 102 45 914 A1 ist ein Verfahren zur Herstellung von Parkett- oder Furnier-Fußbodenplatten bekannt, bei der eine Trägerplatte aus Holz, Holzwerkstoffen, Spanplatten, MDF, HDF oder Sperrholz verwendet wird und die Decklage aus Echtholz einer Imprägnierung mit duroplastischen Kunstharzen unterworfen wird. Die Decklage wird anschließend bedruckt.

Um eine hohe Oberflächenhärte und die Widerstandsfähigkeit von Laminatplatten zu erreichen, wird in der EP 1 512 468 A2 vorgeschlagen, Holzwerkstoffplatten mit einem Melaminharz zu überziehen. In diese Versiegelungsschicht kann dann eine Struktur eingeprägt werden.

Aus der EP 0 524 403 A1 ist eine Mehrschichtmaterialstruktur in Plattenform bekannt, bei der Holzfurnierblätter mittels einer Zwischenschicht aus Mineralfasergewebe heiß verpresst und miteinander verbunden werden. Eine derartige Struktur kann auf eine Hartfaser- oder Sperrholzplatte aufgeleimt oder mit ihr verpresst werden.

Die DE 1 519 154 A offenbart ein Verfahren zum Herstellen von Nachbildungen von Holzdekoren durch Bedrucken von Holzwerkstoffen, wie beispielsweise Furnieren oder furnierten Spanholz- oder Hartfaserplatten. Dabei wird zunächst eine beizenähnliche Grundierung aufgebracht, mit der die zu bedruckende Oberfläche vorbehandelt wird.

Die DE 197 54 420 C1 offenbart ein Verfahren zur optischen Aufwertung von farblich blassen und gleichmäßigen Furnieren, bei dem in das Furnier eine flächenfüllende

Oberflächenstruktur geprägt wird und diese Struktur einer optisch verstärkenden Nachbehandlung unterzogen wird.

Aus der DE 195 13 735 A1 ist ein Verfahren zur Veredelung einer Echtholzoberfläche bekannt, bei dem mittels gravierter Strukturwalzen eine Beizfarbe derart aufgetragen wird, dass eine Holzmaserstruktur einer anderen Holzsorte auf die Echtholzoberfläche übertragen wird.

Aus der EP 1 479 524 A1 ist ein Verfahren zum Herstellen eines Bauteiles mit einer Holzmaserungsoberfläche bekannt, bei dem die Oberfläche mittels eines Tintenstrahldruckers aufgedruckt wird.

Ein Verfahren zur kontinuierlichen Herstellung einer aus einer Kernschicht mit mehreren Schichten aus orientiert gestreuten Langschichten und diese umgebenden zwei Feinspan-Deckschichten bestehende Mehrschichtplatte ist aus der DE 44 34 876 A1 bekannt.

Von dieser Problemstellung ausgehend soll die eingangs beschriebene Holzwerkstoffplatte mit einem Kern aus OSB so verbessert werden, dass sie einfach und kostengünstig hergestellt werden kann, eine hohe Stabilität des Kernes besitzt, optisch aufgewertet ist und von höherwertiger Qualität erscheint.

Zur Problemlösung zeichnet sich eine gattungsgemäße Holzwerkstoffplatte dadurch aus, dass der Kern aus einer in einem Arbeitsgang hergestellten Platte, bestehend aus einer oberen Feinspanschicht, einer oberen OSB-Deckschicht, einer Mittelschicht und einer unteren Deckschicht besteht, dass die der Versiegelungsschicht zugewandte Oberfläche der Furnierschicht mit mindestens einem, das Dekor verändernden Farbauftrag bedruckt ist und unterhalb der Furnierschicht die Feinspanschicht aus feinen Holzspänen und/oder Holzfasern vorgesehen ist. Mit dieser Deckschicht wird die Oberfläche geglättet. Gleichzeitig hat eine solche Deckschicht auch den Vorteil, dass ein Durchscheinen des Kernmaterials verhindert werden kann, da die Oberflächenstruktur gegenüber OSB sehr stark vergleichmäßigt wird. Durch die glatte Oberfläche kann die Furnierschicht mittels eines Leimes in einfacher Weise auf der Trägerplatte befestigt werden.

Durch diese Ausgestaltung können preiswert erhältliche Echtholz-Furniere (beispielsweise Birke) verwendet werden, die dann so bedruckt werden, dass sich ein Dekor einstellt, das dem Betrachter ein höherwertiges Dekor, beispielsweise Edelholz-Dekor (Eiche, Mahagoni) suggeriert. Durch entsprechende Einstellung der Farbgebung kann auch bei dünnen Furnierschichten ein Durchscheinen des Kernmaterials verhindert werden, wenn dieses aus OSB besteht. Damit kann eine Zwischenlage aus harzgetränktem Papier eliminiert werden.

Die Versiegelungsschicht kann eine Lackschicht oder eine Harzschicht sein, die insbesondere mit abriebfesten Partikeln, beispielsweise mit Korund, versehen ist.

An mindestens zwei sich gegenüberliegenden Seitenkanten kann eine von der Oberseite ausgehende Fase ausgebildet sein. Die Anfasungen ergänzen sich bei zwei miteinander verbundenen Paneelen zu V-Fugen, wodurch insbesondere bei Fußbodenpaneelen der Charakter von Dielen, also gehobelten Brettern erzeugt werden kann.

In die Versiegelungsschicht kann eine Struktur eingeprägt sein, die vorzugsweise zu dem gedruckten Dekor korrespondiert, um die Oberflächenhaptik des Dekors, die durch das Aufbringen der Versiegelungsschicht verloren geht, wieder herzustellen.

Um ein Verziehen der Holzwerkstoffplatte zu vermeiden, ist vorzugsweise vorgesehen, auf der der Furnierschicht abgewandten Seite des Kerns eine Gegenzuglage aufzubringen.

Wenn sich gegenüberliegende Seitenkanten mit einer Profilierung mit Feder und hierzu korrespondierender Nut versehen werden und die Feder und Nut mit integrierten Verriegelungsmitteln versehen sind, können mehrere identisch ausgebildete Platten miteinander leimlos verbunden und verriegelt werden.

Das Verfahren zur Herstellung und Veredelung einer gattungsgemäßen Holzwerkstoffplatte zeichnet sich dadurch aus, dass der Kern aus einer in einem Arbeitsgang hergestellten vierschichtigen OSB-Platte besteht, die eine obere Feinspanschicht, eine obere OSB-Deckschicht, eine Mittelschicht und eine untere Deckschicht aufweist und dass die Sichtseite der Furnierschicht mit mindestens einer Farbschicht so bedruckt wird, dass das Dekor optisch zu einem anderen Echtholz-Dekor verändert wird.

Anschließend kann auf die bedruckte Furnierschicht die Versiegelungsschicht aufgesprüht oder aufgewalzt und zumindest teilweise ausgehärtet werden. In die teilweise ausgehärtete Versiegelungsschicht kann dann eine zu dem veränderten Dekor korrespondierende Struktur eingeprägt werden. Anschließend wird die Versiegelungsschicht vollständig ausgehärtet.

Das Bedrucken der Furnierschicht kann durch ein analoges und/oder digitales Druckverfahren erfolgen.

Die Lackschicht kann beispielsweise durch UV- oder Elektronenstrahlen gehärtet werden. Auch Acryllacke können zum Einsatz kommen. Harzsysteme auf Basis von UF, MF und MUF sind ebenfalls verwendbar.

Mit Hilfe einer Zeichnung soll ein Ausführungsbeispiel der Erfindung nachfolgend näher erläutert werden.

Es zeigt:
- Figur 1: die Draufsicht auf ein Fußbodenpaneel;

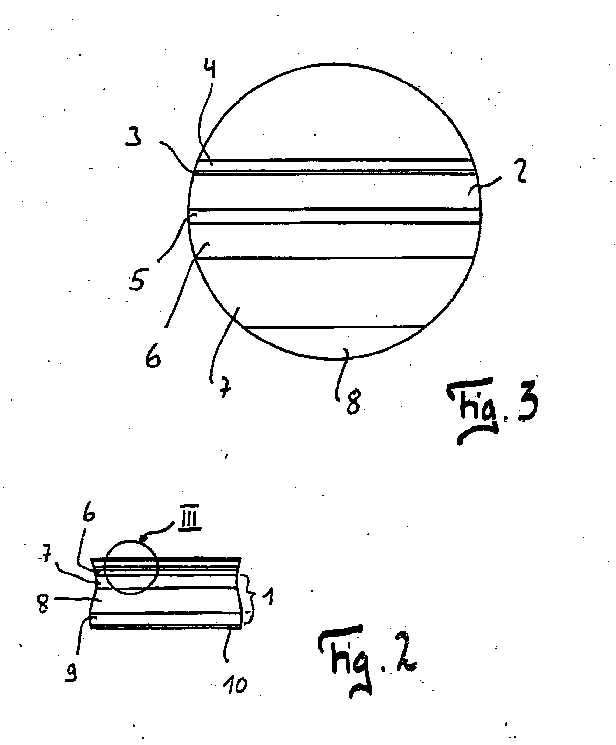

- Figur 2: den Schnitt entlang der Linie II-II nach Figur 1:

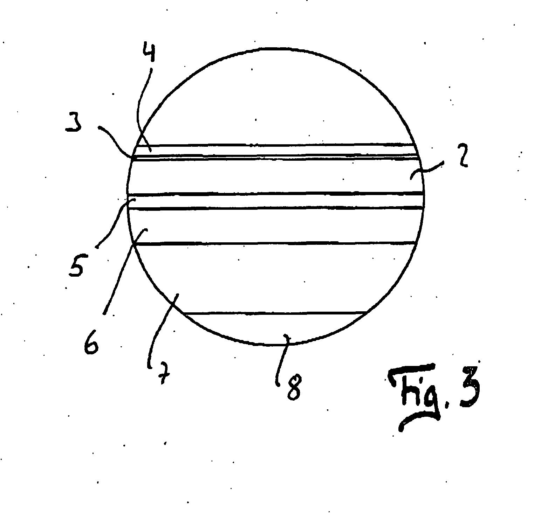

- Figur 3: die vergrößerte Darstellung des Ausschnittes gemäß Sichtpfeil III nach Figur 2;

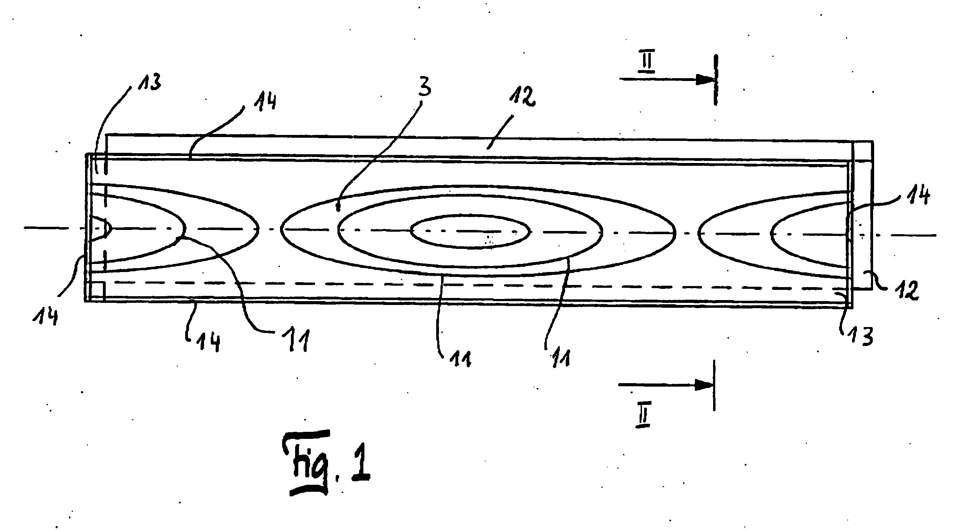

Figur 1 zeigt die Draufsicht auf eine Holzwerkstoffplatte, die als Fußbodenpaneel ausgebildet ist. An sich gegenüberliegenden Seitenkanten ist das Fußbodenpaneel mit einer Profilierung mit Feder 12 und Nut 13 versehen, über die identisch ausgestaltete Paneele miteinander leimlos verbunden werden können. Hierzu sind Feder 12 und Nut 13 mit hier nicht näher dargestellten Verriegelungsmitteln versehen, über die die Paneele miteinander eine Schnappverbindung eingehen können. Diese Verriegelungsmittel können einteilig mit dem Kern 1 ausgebildet sein. Des Weiteren sind die Kanten mit Fasen 14 versehen, die an der Verbindungsstelle zweier Paneele eine V-Fuge ausbilden und den Charakter von Dielen erzeugen.

Der Kern 1 besteht aus einer in einem Arbeitsgang hergestellten 4-schichtigen OSB-Platte, bestehend aus der oberen Feinspanschicht 6, der oberen OSB-Deckschicht 7, der Mittelschicht 8 und der unteren Deckschicht 9. Die Dicke der OSB-Platte beträgt 6-15 mm, vorzugsweise 10 mm. Auf der Feinspanschicht 6 ist ein kostengünstiges Furnier 2, beispielsweise Birkenfurnier, mit einer Dicke von 0,2 bis 2,5 mm mittels einer Leimschicht 5 aufgeklebt. Das ursprüngliche Dekor der Furnierschicht 2 (beispielsweise Birke) ist so mittels einem analogen oder digitalen Direktdruckverfahren farblich und von der Struktur verändert, dass sich das Dekor 3 eines kostenintensiveren Holzes, beispielsweise Kirsche, Eiche oder Mahagoni einstellt. Die Furnierschicht 2 wird abgedeckt von einer durchsichtigen Versiegelungsschicht 4 aus einem UVhärtbaren Lack oder einem Melaminharz, in die zur Verbesserung des Verschleißverhaltens Korundpartikel oder ähnliches eingebettet sein können.

Um den optischen Eindruck des hochwertigen Dekors 3 zu verstärken, sind in die Versiegelungsschicht 4 zu dem Dekor korrespondierende Strukturen 11 eingeprägt, wodurch sich auch haptisch der Eindruck des hochwertigen Holzes einstellt.

Das Fußbodenpaneel ist aus einer größeren Platte ausgesägt und an den Seitenkanten entsprechend profiliert. Hierzu wird eine OSB-Trägerplatte mit einer Feinspan-deckschicht 6 bereitgestellt. Auf der Oberseite der Trägerplatte wird das Furnier 2 auf der Feinspan-Deckschicht 5 ausgerichtet und aufgeleimt. Auf der Unterseite wird der Gegenzug 10 an der unteren Deckschicht 9 aufgebracht. Zur Verbindung der Feinspan-Deckschicht 5 und des Furniers 2 sowie dem Anbringen des Gegenzuges 10 an der unteren Deckschicht 9 wird der Verbund unter Druck- und Temperatureinwirkung ausgehärtet. Anschließend kann das Furnier 2, wenn notwendig, gewässert und abgeschliffen werden. Sodann wird das Furnier 2 mit einem Holzdekor 3 bedruckt, das höherwertig ist, als das aufgeklebte Furnier 2. Die Lack-Harzschicht 4, die auch ein Melaminfilm sein kann, dient zur Versiegelung des mit dem Dekor 3 versehenen Furniers 2. Nach teilweisem Aushärten der Versiegelungsschicht 4 wird dann optional eine dekorsynchrone Struktur 11 in die Oberfläche eingeprägt und anschließen die Versiegelungsschicht 4 vollständig ausgehärtet.

### Bezugszeichenliste:

- 1: Kern
- 2: Furnier/Fumierschicht
- 3: Dekor
- 4: Versiegelungsschicht
- 5: Leimschicht
- 6: Feinspanschicht
- 7: obere Deckschicht der OSB
- 8: Mittelschicht der OSB
- 9: untere Deckschicht der OSB
- 10: Gegenzug
- 11: Struktur
- 12: Feder
- 13: Nut
- 14: Fase

## Patentansprüche

1. Holzwerkstoffplatte, insbesondere Fußbodenpaneel, mit einem Kern (1) aus OSB (oriented strand board), einer auf zumindest einer Oberseite des Kerns (1) aufgebrachten Echtholz-Furnierschicht (2) und einer die Furnierschicht (2) abdeckenden Versiegelungsschicht (4), **dadurch gekennzeichnet, dass** der Kern (1) aus einer in einem Arbeitsgang hergestellten Platte, bestehend aus einer oberen Feinspanschicht (6), einer oberen OSB-Deckschicht (7), einer Mittelschicht (8) und einer unteren Deckschicht (9), besteht, dass die der Versiegelungsschicht (4) zugewandte Oberfläche der Furnierschicht (2) mit mindestens einem, das Dekor (3) verändernden Farbauftrag bedruckt ist und unterhalb der Furnierschicht (2) die Feinspanschicht (6) aus feinen Holzspänen und/oder Holzfasern angeordnet ist.

2. Holzwerkstoffplatte nach Anspruch 1, **dadurch gekennzeichnet, dass** die Oberfläche so bedruckt ist, dass sich das Dekor (3) optisch zu einem anderen Echtholz-Dekor verändert.

3. Holzwerkstoffplatte nach einem oder mehreren der vorstehenden Ansprüche, **dadurch gekennzeichnet, dass** die Versiegelungsschicht (4) eine Lackschicht ist.

4. Holzwerkstoffplatte nach Anspruch 1 oder 2, **dadurch gekennzeichnet, dass** die Versiegelungsschicht (4) eine Harzschicht ist.

5. Holzwerkstoffplatte nach Anspruch 3 oder 4, **dadurch gekennzeichnet, dass** die Versiegelungsschicht (4) mit abriebfesten Partikeln, insbesondere mit Korund, versehen ist.

6. Holzwerkstoffplatte nach einem oder mehreren der vorstehenden Ansprüche, **gekennzeichnet durch** an mindestens zwei sich gegenüberliegenden Seitenkanten vorgesehene, von der Oberseite ausgehende Fasen (14).

7. Holzwerkstoffplatte nach einem oder mehreren der vorstehenden Ansprüche, **dadurch gekennzeichnet, dass** in die Versiegelungsschicht (4) eine Struktur (11) eingeprägt ist.

8. Holzwerkstoffplatte nach Anspruch 7, **dadurch gekennzeichnet, dass** die Struktur (11) zu dem gedruckten Dekor (3) korrespondiert.

9. Holzwerkstoffplatte nach einem oder mehreren der vorstehenden Ansprüche, **dadurch gekennzeichnet, dass** die der Furnierschicht (2) abgewandte Seite des Kerns (1) eine Gegenzuglage (9) aufweist.

10. Holzwerkstoffplatte nach einem oder mehreren der vorstehenden Ansprüche, **dadurch gekennzeichnet, dass** sich gegenüberliegende Seitenkanten mit einer Profilierung mit Feder (12) und hierzu korrespondierender Nut (13) versehen sind und mehrere identisch ausgebildete Platten miteinander leimlos verbindbar und zueinander verriegelbar sind.

11. Verfahren zur Herstellung und Veredelung einer mit einer Echtholz-Furnierschicht (2) versehenen Holzwerkstoffplatte mit einem Kern (1) aus Holzwerkstoff, **dadurch gekennzeichnet, dass** der Kern (1) aus einer in einem Arbeitsgang hergestellten vierschichtigen OSB-Platte besteht, die aus einer oberen Feinspanschicht (6), einer oberen OSB-Deckschicht (7), einer Mittelschicht (8) und einer unteren Deckschicht (9) aufgebaut ist, und dass durch Bedrucken der Sichtseite der Furnierschicht (2) mit mindestens einer Farbschicht das Dekor (3) optisch zu einem anderen Echtholz-Dekor verändert wird.

12. Verfahren nach Anspruch 11, **dadurch gekennzeichnet, dass** auf die bedruckte Furnierschicht (2) eine Versiegelungsschicht (4) aufgesprüht oder aufgewalzt und zumindest teilweise ausgehärtet wird.

13. Verfahren nach Anspruch 12, **dadurch gekennzeichnet, dass** in die Versiegelungsschicht (4) eine zu dem veränderten Dekor (3) korrespondierende Struktur (11) eingeprägt wird.

## Claims

1. Wood material board, in particular floor panel, with a core (1) made of OSB (oriented strand board), a real wood veneer layer (2) applied to at least an upper side of the core (1) and a sealing layer (4) covering the veneer layer (2), **characterised in that** the core (1) consists of a board produced in one work operation, consisting of an upper fine chip layer (6), an upper OSB cover layer (7), a centre layer (8) and a lower cover layer (9), **in that** the surface of the veneer layer (2) facing the sealing layer (4) is printed with at least one colour application changing the decoration (3) and the fine chip layer (6) made of fine wood chips and/or wood fibres is arranged below the veneer layer (2).

2. Wood material board according to claim 1, **characterised in that** the surface is printed In such a way that the decoration (3) changes optically to another real wood decoration.

3. Wood material board according to any one or more of the preceding claims, **characterised in that** the sealing layer (4) is a lacquer layer.

4. Wood material board according to claim 1 or 2, **characterised in that** the sealing layer (4) is a resin layer.

5. Wood material board according to claim 3 or 4, **characterised in that** the sealing layer (4) is provided with abrasion-resistant particles, in particular with corundum.

6. Wood material board according to any one or more of the preceding claims, **characterised by** bevels (14) starting from the upper side and provided on at least two opposing side edges.

7. Wood material board according to any one or more of the preceding claims, **characterised in that** a structure (11) is embossed into the sealing layer (4).

8. Wood material board according to claim 7, **characterised in that** the structure (11) corresponds with the printed decoration (3).

9. Wood material board according to any one or more of the preceding claims, **characterised in that** the side of the core (1) remote from the veneer layer (2) has a stabilising layer (9).

10. Wood material board according to any one or more of the preceding claims, **characterised in that** opposing side edges are provided with a profiling with a tongue (12) and groove (13) corresponding thereto and a plurality of identically formed boards can be connected to one another without glue and can be locked to one another.

11. Method for producing and finishing a wood material board provided with a real wood veneer layer (2) and having a core (1) made of wood material, **characterised in that** the core (1) consists of a four-layer OSB board produced in one work operation, which is constructed from an upper fine chip layer (6), an upper OSB cover layer (7), a centre layer (8) and a lower cover layer (9), and **in that** the decoration (3) is optically changed to a different real wood decoration by printing the visible side of the veneer layer (2) with at least one colour layer.

12. Method according to claim 11, **characterised in that** a sealing layer (4) is sprayed or rolled onto the printed veneer layer (2) and is at least partially hardened.

13. Method according to claim 12, **characterised in that** a structure (11) corresponding with the changed decoration (3) is embossed into the sealing layer (4).

## Revendications

1. Panneau en matériau dérivé du bois, en particulier panneau de plancher, comprenant un noyau (1) en OSB (oriented strand board), une couche de placage en bois véritable (2) rapportée sur au moins une face supérieure du noyau (1), et une couche de vitrification (4) recouvrant la couche de placage (2), **caractérisé en ce que** le noyau (1) consiste en un panneau réalisé lors d'une étape de fabrication, consistant en une couche de copeaux fins (6) supérieure, une couche de recouvrement en OSB (7) supérieure, une couche intermédiaire (8), et une couche de recouvrement (9) inférieure, **en ce que** la surface de la couche de placage (2) du côté de la couche de vitrification (4) est imprimée avec au moins une application de couleur modifiant le décor (3) et la couche de copeaux fins (6) en fins copeaux de bois et/ou en fibres de bois est agencée sous la couche de placage (2).

2. Panneau en matériau dérivé du bois selon la revendication 1, **caractérisé en ce que** la surface est imprimée de façon que le décor (3) se modifie visuellement en un autre décor-bois véritable.

3. Panneau en matériau dérivé du bois selon l'une ou plusieurs des revendications précédentes, **caractérisé en ce que** la couche de vitrification (4) est une couche de laque.

4. Panneau en matériau dérivé du bois selon la revendication 1 ou 2, **caractérisé en ce que** la couche de vitrification (4) est une couche de résine.

5. Panneau en matériau dérivé du bois selon la revendication 3 ou 4, **caractérisé en ce que** la couche de vitrification (4) est munie de particules résistantes à l'usure, en particulier de corindon.

6. Panneau en matériau dérivé du bois selon l'une ou plusieurs des revendications précédentes, **caractérisé par** des chanfreins (14) partant de la face supérieure et prévus sur au moins deux arêtes latérales opposées.

7. Panneau en matériau dérivé du bois selon l'une ou plusieurs des revendications précédentes, **caractérisé en ce qu'**une structure (11) est estampée dans la couche de vitrification (4).

8. Panneau en matériau dérivé du bois selon la revendication 7, **caractérisé en ce que** la structure (11) correspond au décor (3) imprimé.

9. Panneau en matériau dérivé du bois selon l'une ou plusieurs des revendications précédentes, **caractérisé en ce que** la face du noyau (1) du côté opposé à la couche de placage (2) présente une couche de contre traction.

10. Panneau en matériau dérivé du bois selon l'une ou plusieurs des revendications précédentes, **caractérisé en ce que** des arêtes latérales opposées sont munies d'un profilage ayant une languette (12) et une rainure (13) correspondante et plusieurs panneaux formés identiques peuvent sans colle être reliés ensemble et verrouillés les uns avec les autres.

11. Procédé de fabrication et de finition d'un panneau en matériau dérivé du bois muni d'une couche de placage en bois véritable (2), comprenant un noyau (1) en matériau dérivé du bois, **caractérisé en ce que** le noyau (1) consiste en un panneau d'OSB à quatre couches réalisé lors d'une étape de fabrication, panneau d'OSB qui est construit en une couche de copeaux fins (6) supérieure, une couche de recouvrement en OSB (7) supérieure, une couche intermédiaire (8), et une couche de recouvrement (9) inférieure, et **en ce que** l'on modifie le décor (3) visuellement en un autre décor - bois véritable, en imprimant la face visible de la couche de placage (2) avec au moins une couche colorée.

12. Procédé selon la revendication 11, **caractérisé en ce que** sur la couche de placage (2) imprimée, on pulvérise ou on lamine, et on durcit au moins partiellement une couche de vitrification (4).

13. Procédé selon la revendication 12, **caractérisé en ce que** l'on estampe dans la couche de vitrification (4) une structure (11) correspondant au décor (3) modifié.
